# EUROPÄISCHE PATENTSCHRIFT

(11) **EP 4 047 143 B1**
(45) Veröffentlichungstag und Bekanntmachung des Hinweises auf die Patenterteilung: **13.03.2024**
(21) Anmeldenummer: 22150097.8
(22) Anmeldetag: 04.01.2022
(51) Int. Cl.: E02F 9/22, E02F 3/42, E02F 9/02

(54) **SCHREITBAGGER**
WALKING EXCAVATOR
PELLE ARAIGNÉE

(30) Priorität: 23.02.2021 AT 1721 U
(43) Veröffentlichungstag der Anmeldung: 24.08.2022
(73) Patentinhaber: Kaiser Aktiengesellschaft, 9486 Schaanwald (LI)
(72) Erfinder: Geiger, René, 9434 Au (CH)
(74) Vertreter: Torggler & Hofmann Patentanwälte - Rankweil

(56) Entgegenhaltungen:
- WO-A1-2015/022054
- DE-A1-102011 106 672
- DE-A1-102015 009 111
- US-B1- 6 443 687

## Beschreibung

Die vorliegende Erfindung betrifft einen Schreitbagger mit einem Oberwagen und einem Unterwagen und einer auf dem Oberwagen angeordneten Führerkabine und vier verschwenkbar am Unterwagen angeordneten Schreitbeinen und einem schwenkbar am Oberwagen gelagerten Baggerarm, an dem ein Baggerwerkzeug, insbesondere eine Baggerschaufel, befestigbar oder befestigt ist, wobei zum Hochschwenken und Herunterschwenken des Baggerarms relativ zum Oberwagen ein doppelt-wirkender Differentialzylinder einerseits am Oberwagen und andererseits am Baggerarm angelenkt ist.

Bei Schreitbaggern handelt es sich um eine spezielle Art von Baggern, welche insbesondere für die Arbeit in Hanglagen und/oder auf anderen unebenen Untergründen konzipiert wurde. Im Gegensatz zu Baggern, die auf einem Fahrwerk mit Rädern oder einem Kettenantrieb fahren, weisen solche Schreitbagger vier Schreitbeine auf. Diese sind am Unterwagen des Schreitbaggers angeordnet. Auf diesem Unterwagen ist der Oberwagen des Schreitbaggers angeordnet. Die Schreitbeine können einzeln gegenüber dem Unterwagen verschwenkt werden, um so den Schreitbagger auch im unebenen Gelände und insbesondere in Hanglagen in für den jeweiligen Arbeitsauftrag günstigen Positionen anordnen zu können. An den Schreitbeinen können sich sowohl Räder als auch Abstützfüße befinden. Ein gattungsgemäßer Schreitbagger ist beispielsweise bekannt aus US6443687B1.

Bei gattungsgemäßen Schreitbaggern ist, wie auch bei anderen Baggern vorgesehen, dass das Hochschwenken und Herunterschwenken des Baggerarms relativ zum Oberwagen mittels eines doppelt-wirkenden Differentialzylinders, welcher einerseits an dem Oberwagen und andererseits am Baggerarm angelenkt ist, zu realisieren. Bei doppelt-wirkenden Differentialzylindern ist allerdings zu beachten, dass die vom jeweiligen doppelt-wirkenden Differentialzylinder zur Verfügung stellbaren Maximalkräfte beim Ausfahren größer sind als die bei gleichem Hydraulikdruck beim Einfahren des doppelt-wirkenden Differentialzylinders erreichbaren Kräfte. Dies liegt, wie weiter hinten noch erläutert, in der Bauart eines doppelt-wirkenden Differentialzylinders begründet.

Da beim normalen Baggervorgang in der Regel beim Hochschwenken des Baggerarms größere Kräfte benötigt werden als beim Herunterschwenken, werden die doppelt-wirkenden Differentialzylinder bei Schreitbaggern gemäß des Standes der Technik wie auch bei anderen Baggern in der Regel so eingebaut, dass sie beim Hochschwenken des Baggerarms größere Kräfte zur Verfügung stellen können, als beim Herunterschwenken.

Bei Schreitbaggern ist es nun aber so, dass der Baggerarm nicht nur für den Baggervorgang an sich, sondern auch für das einseitige Anheben des Schreitbaggers bei der Fortbewegung im Gelände eingesetzt wird. Das einseitige Anheben des Schreitbaggers, also insbesondere seines Unterwagens und seines Oberwagens mit der darauf angeordneten Führerkabine erfolgt dabei durch ein Herunterschwenken des Baggerarms relativ zum Oberwagen. Hierbei hat der oben geschilderte übliche Einbau des doppelt-wirkenden Differentialzylinders nun aber den Nachteil, dass beim Herunterschwenken des Baggerarms nur geringere Kräfte zur Verfügung stehen als beim Hochschwenken des Baggerarms.

Zur Beseitigung dieses Problems ist die Verwendung eines größer dimensionierten doppelt-wirkenden Differentialzylinders nur bedingt möglich und sinnvoll, da sich dadurch auch die Hebekraft beim Hochschwenken des Baggerarms erhöhen würde und dies den Stahlbau, also die Konstruktion des Schreitbaggers überlasten würde. Zudem würde ein höherer Volumenstrom zum doppelt-wirkenden Differentialzylinder notwendig, um dieselbe Bewegungsgeschwindigkeit wie bei der heute üblichen Dimensionierung der doppelt-wirkenden Differentialzylinder beibehalten zu können.

Aufgabe der Erfindung ist es somit, einen Schreitbagger der oben genannten Art dahingehend zu verbessern, dass beim Herunterschwenken des Baggerarms relativ zum Oberwagen und damit zum einseitigen Anheben des Schreitbaggers möglichst große Kräfte realisiert werden können.

Um dieses Problem zu lösen, schlägt die Erfindung vor, dass zur Unterstützung des doppelt-wirkenden Differentialzylinders beim Herunterschwenken des Baggerarms relativ zum Oberwagen zusätzlich ein einfach-wirkender Differentialzylinder einerseits am Oberwagen und andererseits am Baggerarm angelenkt ist.

Es ist somit eine Grundidee der Erfindung, zusätzlich zum an sich bekannten doppelt-wirkenden Differentialzylinder einen einfach-wirkenden Differentialzylinder an dem Oberwagen und am Baggerarm anzulenken, welcher den doppelt-wirkenden Differentialzylinder beim Herunterschwenken des Baggerarms relativ zum Oberwagen unterstützt. Hierdurch kann erreicht werden, dass beim Herunterschwenken des Baggerarms größere Kräfte als beim Stand der Technik und insbesondere ungefähr gleich große Kräfte wie beim Hochschwenken des Baggerarms zur Verfügung gestellt werden können. Dies kann besonders gut beim einseitigen Anheben des Schreitbaggers bzw. seines Unterwagens und Oberwagens mitsamt seiner Führerkabine verwendet werden, um so den Schreitbagger jeweils optimal auch im steilen Gelände fortbewegen und/oder ausrichten zu können. In diesem Sinne könnten der doppelt-wirkende Differentialzylinder auch als Hauptzylinder und der erfindungsgemäß zusätzlich vorgesehene einfach-wirkende Differentialzylinder als Zusatzzylinder bezeichnet werden. Das Hochschwenken des Baggerarms könnte auch als Anheben des Baggerarms und das Herunterschwenken des Baggerarms als Absenken des Baggerarms bezeichnet werden. Diese Begriffe beziehen sich immer auf die normale Betriebsstellung, in der ein Fahrer des Schreitbaggers in der Führerkabine sitzt, um den Schreitbagger zu bedienen. Der doppelt-wirkende Differentialzylinder und auch der einfach-wirkende Differentialzylinder werden bevorzugt hydraulisch angetrieben.

Bei bevorzugten Ausgestaltungsformen der Erfindung ist vorgesehen, dass der einfach-wirkende Differentialzylinder und somit in anderen Worten der Zusatzzylinder ausschließlich beim Herunterschwenken des Baggerarms relativ zum Oberwagen mit Druck beaufschlagbar ist bzw. in anderen Worten mit Druck beaufschlagt wird. In solchen Ausgestaltungsformen wird der einfach-wirkende Differentialzylinder also nur beim Herunterschwenken des Baggerarms eingesetzt, wobei wie weiter hinten im Detail noch ausgeführt, auch vorgesehen sein kann, dass auch beim Herunterschwenken des Baggerarms der einfach wirkende Differentialzylinder nicht immer, sondern nur selektiv dazu verwendet wird, um den doppelt-wirkenden Differentialzylinder zu unterstützen.

Wie bei Schreitbaggern beim Stand der Technik an sich bekannt und üblich, ist günstigerweise auch bei erfindungsgemäßen Schreitbaggern vorgesehen, dass der doppelt-wirkende Differentialzylinder auf einer Unterseite des Baggerarms angeordnet ist. Für den einfach-wirkenden Differentialzylinder stehen verschiedene Möglichkeiten zur Verfügung. Es kann vorgesehen sein, dass der einfach-wirkende Differentialzylinder auf einer Unterseite des Baggerarms angeordnet ist. Es kann genauso gut aber auch vorgesehen sein, dass der einfach-wirkende Differentialzylinder auf einer Oberseite des Baggerarms angeordnet ist. Es ist sogar denkbar, dass zusätzlich zum doppelt-wirkenden Differentialzylinder mehr als ein einfach-wirkender Differentialzylinder eingesetzt wird, um den doppelt-wirkenden Differentialzylinder beim Herunterschwenken des Baggerarms relativ zum Oberwagen zu unterstützen. Bei solchen Ausgestaltungsformen können die zusätzlichen einfach-wirkenden Differentialzylinder sowohl auf der Oberseite als auch auf der Unterseite des Baggerarms angeordnet sein.

Wie eingangs bereits erläutert, ist es bei bevorzugten Ausgestaltungsformen ein Ziel der Erfindung, beim Herunterschwenken des Baggerarms ungefähr gleich große Maximalkräfte zur Verfügung stellen zu können, wie beim Hochschwenken des Baggerarms.

Bevorzugt ist vorgesehen, dass der Oberwagen und der Unterwagen mittels einer endlos drehbaren Verbindung miteinander verbunden sind. Bei der endlos drehbaren Verbindung handelt es sich bevorzugt um einen Drehkranz. Der Unterwagen könnte auch als Chassis bezeichnet werden.

Es ist bei der Ausführung der Erfindung denkbar, den doppelt-wirkenden Differentialzylinder immer beim Herunterschwenken des Baggerarms mittels des einfach-wirkenden Differentialzylinders zu unterstützen. Bei diesen Varianten ist bevorzugt dann vorgesehen, dass der einfach-wirkende Differentialzylinder beim Herunterschwenken des Baggerarms relativ zum Oberwagen zur Unterstützung des doppelt-wirkenden Differentialzylinders immer mit Druck beaufschlagt ist. Es sind aber auch Varianten der Erfindung möglich, bei denen der einfach-wirkende Differentialzylinder den doppelt-wirkenden Differentialzylinder beim Herunterschwenken des Baggerarms nur dann unterstützt, wenn dies aufgrund der momentan benötigten Kräfte notwendig ist. In diesem Sinne sehen bevorzugte Varianten der Erfindung vor, dass der Schreitbagger ein in Abhängigkeit eines mit einem Drucksensor gemessenen Druckwertes angesteuertes Regelventil aufweist, mit dem der einfach-wirkende Differentialzylinder beim Herunterschwenken des Baggerarms relativ zum Oberwagen zur Unterstützung des doppelt-wirkenden Differentialzylinders selektiv in Abhängigkeit des gemessenen Druckwertes mit Druck beaufschlagbar ist. Das Wort selektiv bedeutet dabei eben, dass der doppelt-wirkende Differentialzylinder beim Herunterschwenken des Baggerarms nur dann vom einfach-wirkenden Differentialzylinder unterstützt wird, wenn der vom Drucksensor gemessene Druckwert in einem vorbestimmten Intervall liegt.

Um beim Herunterschwenken des Baggerarms relativ zum Oberwagen besonders große Kräfte zur Verfügung stellen zu können, sehen bevorzugte Varianten der Erfindung vor, dass der Schreitbagger eine in Abhängigkeit eines mit einem oder dem Drucksensor gemessenen Druckwertes angesteuerte Druckhochschaltung aufweist, mit der der doppelt-wirkende Differentialzylinder, und vorzugsweise auch der einfach-wirkende Differentialzylinder, beim Herunterschwenken des Baggerarms relativ zum Oberwagen in Abhängigkeit des gemessenen Druckwertes mit einem gegenüber einem Normaldruckniveau erhöhten Druck beaufschlagbar ist bzw. sind. Bei diesen Varianten wird somit mittels der Druckhochschaltung bei bestimmten Betriebszuständen ein höherer Druck als bei anderen Betriebszuständen zur Verfügung gestellt, wodurch dann auch größere Kräfte beim Herunterschwenken des Baggerarms erzielt werden können. Bei einer selektiven Ansteuerung, wie sie oben genannt ist, kann vorgesehen sein, dass das von der Druckhochschaltung zur Verfügung gestellte höhere Druckniveau nur dem doppelt-wirkenden Differentialzylinder oder dem doppelt-wirkenden Differentialzylinder und dem einfach-wirkenden Differentialzylinder zugeführt wird.

Bevorzugt ist jedenfalls vorgesehen, dass der mit dem Drucksensor gemessene Druckwert ein Druck in einer Druckleitung ist, welche zu einem zum Herunterschwenken des Baggerarms beaufschlagten Zylinderinnenraum des doppelt-wirkenden Differentialzylinders führt.

Weitere Merkmale und Einzelheiten werden nachfolgend anhand von Ausführungsbeispielen der Erfindung exemplarisch erläutert. Es zeigen:
- Fig. 1: schematisiert einen Schreitbagger gemäß dem Stand der Technik;
- Fig. 2: eine schematische Darstellung zu einem doppeltwirkenden Differentialzylinder;
- Fig. 3 und 4: schematische Darstellungen zu zwei verschiedenen Varianten eines einfach-wirkenden Differentialzylinders;
- Fig. 5 und 6: erfindungsgemäße Ausführungsbeispiele von Schreitbaggern und
- Fig. 7 und 8: schematische Darstellungen zu verschiedenen Varianten, wie der doppelt-wirkende Differentialzylinder und der einfach-wirkende Differentialzylinder mit Druck beaufschlagt werden können.

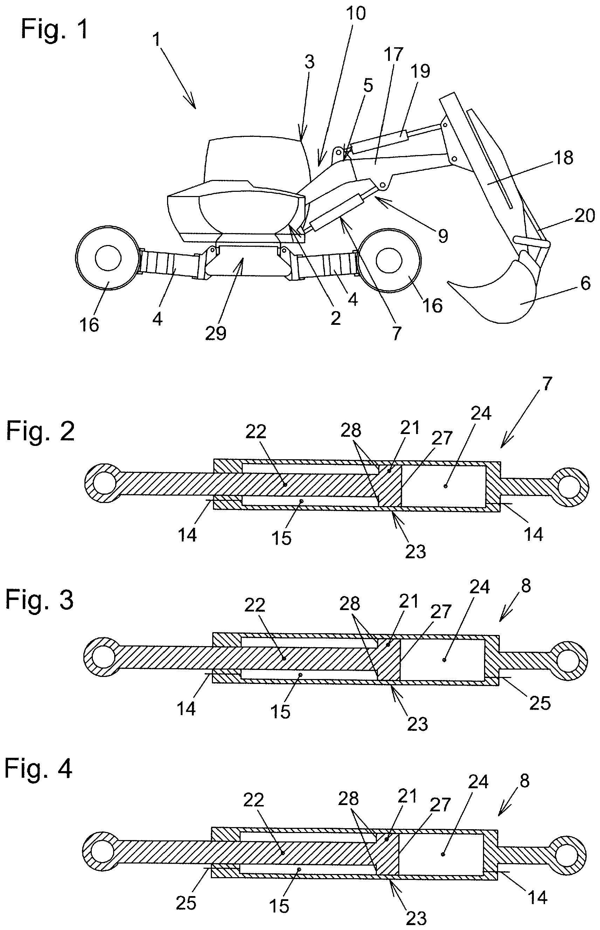

In Fig. 1 ist ein beim Stand der Technik an sich bekannter Schreitbagger 1 in einer Seitenansicht gezeigt. Er weist einen Oberwagen 2 auf, auf dem die Führerkabine 3 angeordnet ist. Der Oberwagen 2 mit der Führerkabine 3 ist mittels einer endlos drehbaren Verbindung mit dem Unterwagen 29 verbunden. Der Unterwagen 29 wiederum wird über vier Schreitbeine 4 auf dem Untergrund abgestützt. Jedes der Schreitbeine 4 ist, wie an sich bekannt, sowohl in horizontaler als auch in vertikaler Richtung einzeln, also unabhängig von den anderen drei Schreitbeinen 4 verschwenkbar, was eine sehr hohe Flexibilität bei der Anordnung, Positionierung und Bewegung des Schreitbaggers 1 an Böschungen, Abhängen und/oder in anderem steilen Gelände ermöglicht. An jedem Schreitbein 4 ist im gezeigten Ausführungsbeispiel ein Rad 16 angeordnet. Anstelle der oder zusätzlich zu diesen Rädern 16 können auch Stützfüße oder dergleichen an den Schreitbeinen 4 angebracht sein. Die Räder 16 können zum Fahren des Schreitbaggers 1 angetrieben sein. Hier sind unterschiedlichste Ausgestaltungsformen beim Stand der Technik bekannt, die in dieser Form auch bei erfindungsgemäßen Schreitbaggern 1 eingesetzt werden können.

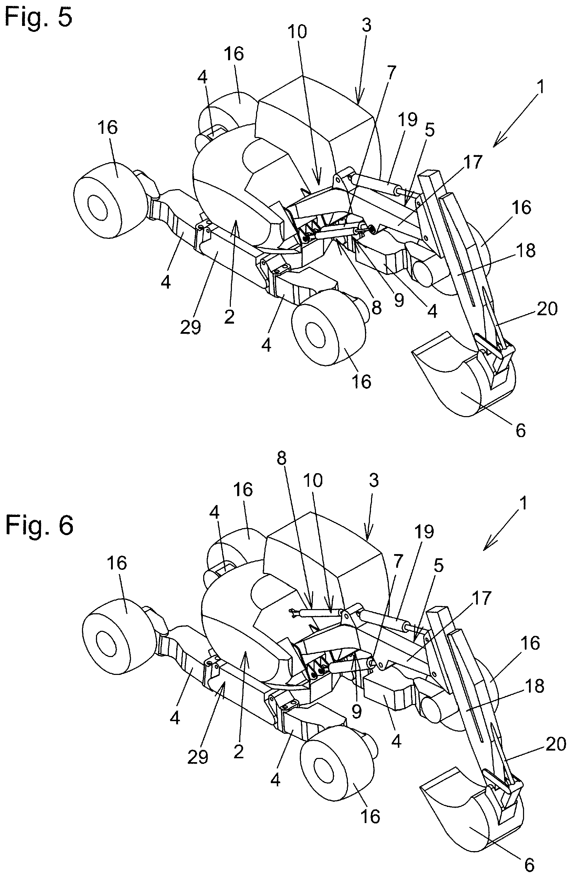

An dem Oberwagen 2 ist auch der Baggerarm 5 schwenkbar gelagert. Bevorzugt besteht der Baggerarm 5 auch bei der Erfindung, wie hier sowohl in Fig. 1 als auch in den Fig. 5 und 6 gezeigt, aus zumindest zwei Baggerarmsegmenten 17, 18, die mittels des Schwenkantriebs 19 relativ zueinander verschwenkt werden können. Am von dem Oberwagen 2 des Schreitbaggers 1 abgewandten Ende des Baggerarms 5 befindet sich das Baggerwerkzeug 6, welches hier in Fig. 1 wie auch in den Darstellungen erfindungsgemäßer Schreitbagger 1 in den Fig. 5 und 6 als Baggerschaufel ausgeführt ist. Mit dem Schwenkantrieb 20 kann das Baggerwerkzeug 6, also hier die Baggerschaufel bei erfindungsgemäßen Schreitbaggern 1 in an sich bekannter Art und Weise relativ zum Baggerarm 5 bzw. zum Baggerarmsegment 18 verschwenkt werden. Auch Schnellmontageplatten zum raschen Werkzeugwechsel können in an sich bekannter Art und Weise bei der Erfindung ausgeführt sein. Natürlich können bei erfindungsgemäßen Schreitbaggern 1, wie beim Stand der Technik an sich bekannt, auch andere Baggerwerkzeuge 6 wie z.B. Haken, Bohrwerkzeuge, Meißel oder dergleichen anstelle der hier gezeigten Baggerschaufel am Baggerarm 5 angebracht werden. Soweit sich dies mit nachfolgend noch geschilderten erfindungsgemäßen Ausbildungen des Antriebs für den Baggerarm 5 zusammen realisieren lässt, kann der Baggerarm 5 von erfindungsgemäßen Schreitbaggern 1 in unterschiedlichsten an sich bekannten Ausgestaltungsformen ausgeführt werden. Günstigerweise sind der doppelt-wirkende Differentialzylinder 7 und der einfach-wirkende Differentialzylinder 8 bei der Erfindung an dem Baggerarmsegment 17 angelenkt, welches an dem Oberwagen 2 des Schreitbaggers 1 angelenkt ist.

Beim Stand der Technik wird der in Fig. 1 dargestellte doppelt-wirkende Differentialzylinder 7 sowohl zum Hochschwenken als auch zum Herunterschwenken des Baggerarms 5 relativ zum Oberwagen 2 verwendet. Er ist hierzu einerseits an dem Oberwagen 2 und andererseits am Baggerarm 5 verschwenkbar angelenkt.

Fig. 2 zeigt schematisiert einen doppelt-wirkenden Differentialzylinder 7, wie er beim Stand der Technik eingesetzt wird, und auch bei der Erfindung eingesetzt werden kann. Der in Fig. 2 dargestellte doppelt-wirkende Differentialzylinder 7 weist einen Zylinder 23 auf, in dem ein an einer Kolbenstange 22 angeordneter Kolben 21 verschiebbar gelagert ist. Der Kolben 21 unterteilt den Innenraum des Zylinders 23 in den stangenseitigen Zylinderraum 15 und den bodenseitigen Zylinderraum 24. Bei einer Beaufschlagung des bodenseitigen Zylinderraums 24 mit Druck über die Druckleitung 14 wirkt der Druck im Zylinderraum 24 auf die gesamte Bodenfläche 27. Wird hingegen der Druck über die Druckleitung 14 im stangenseitigen Zylinderraum 15 aufgebaut, so wirkt dieser Druck nur auf die durch die Kolbenstange 22 reduzierte Kolbenfläche 28, woraus sich die Tatsache ergibt, dass bei solchen doppelt-wirkenden Differentialzylindern 7 die bei Beaufschlagung des bodenseitigen Zylinderraums 24 für die Bewegung des Baggerarms 5 zur Verfügung gestellte Kraft größer ist, als wenn der stangenseitige Zylinderinnenraum 15 mit demselben Druck beaufschlagt wird. Dies ist an sich bekannt und ein zentrales Merkmal aller doppelt-wirkenden Differentialzylinder 7. Aufgrund der Tatsache, dass über die entsprechende Druckleitung 14 sowohl der stangenseitige Zylinderinnenraum 15 als auch der bodenseitige Zylinderraum 24 mit Druck beaufschlagt werden kann, werden solche, beispielhaft in Fig. 2 dargestellte Differentialzylinder als doppelt-wirkende Differentialzylinder 7 bezeichnet.

Der Einbau solcher doppelt-wirkenden Differentialzylinder 7 unterhalb des Baggerarms 5 hat immer zur Folge, dass bei gleichen Betriebsdrücken beim Hochschwenken des Baggerarms 5 vom doppelt-wirkenden Differentialzylinder 7 größere Kräfte zur Verfügung gestellt werden, als beim Herunterschwenken des Baggerarms 5.

Um nun eine Möglichkeit zu schaffen, auch beim Herunterschwenken des Baggerarms 5 und damit beim einseitigen Anheben des Schreitbaggers 1 bzw. des Unterwagens 29 und Oberwagens 2 samt Führerkabine 3 mittels des Baggerarms 5 ebenfalls große Kräfte zur Verfügung stellen zu können, sieht die Erfindung nun vor, dass zur Unterstützung des doppelt-wirkenden Differentialzylinders 7 beim Herunterschwenken des Baggerarms 5 relativ zum Oberwagen 2 zusätzlich ein einfach-wirkender Differentialzylinder 8 einerseits an dem Oberwagen 2 und andererseits am Baggerarm 5 angelenkt ist. In anderen Worten wird somit der einfach-wirkende Differentialzylinder 8 als Zusatzzylinder bei der Erfindung zusätzlich zu einem als Hauptzylinder wirkenden doppelt-wirkenden Differentialzylinder 7 beim Herunterschwenken des Baggerarms 5 relativ zum Oberwagen 2 eingesetzt. Durch diese Unterstützung mittels des einfach-wirkenden Differentialzylinders 8 können auch beim Herunterschwenken des Baggerarms 5 relativ zum Oberwagen 2 entsprechend große Kräfte bereitgestellt werden.

Die Fig. 3 und 4 zeigen schematische Darstellungen, wie solche einfach-wirkende Differentialzylinder 8 ausgebildet sein können. Auch sie weisen einen im Zylinder 23 verschiebbar gelagerten Kolben 21 auf, an dem einseitig eine Kolbenstange 22 befestigt ist. Der Kolben 21 teilt auch hier das Innenvolumen des Zylinders 23 in einen stangenseitigen Zylinderraum 15 und in einen bodenseitigen Zylinderraum 24. Im Unterschied zum doppelt-wirkenden Differentialzylinder 7 gemäß Fig. 2 ist bei einfach-wirkenden Differentialzylindern 8 aber vorgesehen, dass nur einer der Zylinderinnenräume 15 oder 24 über eine entsprechende Druckleitung 14 mit Druck beaufschlagt werden kann, während der jeweils andere Zylinderinnenraum 15 bzw. 24 über eine Entlüftungsöffnung 25 jeweils mit der Außenumgebung in Verbindung steht. Bei den einfach-wirkenden Differentialzylindern 8, wie sie in Fig. 3 und 4 beispielhaft dargestellt sind, kann also nur einer der Zylinderräume 15 oder 24 mit Druck beaufschlagt werden, sodass der einfach-wirkende Differentialzylinder 8 auch nur in einer Richtung Kraft aufbringen kann und in der anderen Richtung keine Arbeit verrichten kann.

In den Fig. 5 und 6 sind nun schematisiert zwei erfindungsgemäße Ausführungsbeispiele von Schreitbaggern 1 gezeigt. Bis auf die genannten Unterschiede können diese, wie Schreitbagger 1 gemäß des Standes der Technik und wie z.B. in Fig. 1 gezeigt, ausgebildet sein. Auf die möglichen Ausgestaltungsformen, wie sie beim Stand der Technik an sich bekannt sind, wird hier nicht weiter eingegangen und auf die vorherigen Schilderungen zu Fig. 1 verwiesen. Im Unterschied zum Stand der Technik wird nun aber bei der Erfindung der jeweils vorhandene doppelt-wirkende Differentialzylinder 7 bei den erfindungsgemäßen Schreitbaggern 1 gemäß der Fig. 5 und 6 beim Herunterschwenken des Baggerarms 5 relativ zum Oberwagen 2 von einem zusätzlich vorhandenen einfach-wirkenden Differentialzylinder 8 unterstützt. Der einfach-wirkende, sozusagen als Zusatzzylinder eingesetzte Differentialzylinder 8 ist bei beiden Ausführungsbeispielen einerseits an dem Oberwagen 2 und andererseits am Baggerarm 5 bzw. an dessen Baggerarmsegment 17 angelenkt. Im Ausführungsbeispiel gemäß Fig. 5 sind sowohl der doppelt-wirkende Differentialzylinder 7 als auch der zusätzlich vorhandene einfach-wirkende Differentialzylinder 8 auf der Unterseite 9 des Baggerarms 5 angeordnet. Zum Hochschwenken des Baggerarms 5 wird, wie an sich bekannt, der bodenseitige Zylinderraum 24 des doppelt-wirkenden Differentialzylinders 7 mit Druck beaufschlagt. Beim Hochschwenken des Baggerarms 5 verrichtet der einfach-wirkende Differentialzylinder 8 keine Arbeit. Zum Herunterschwenken des Baggerarms 5 werden sowohl im doppelt-wirkenden Differentialzylinder 7 als auch im einfach-wirkenden Differentialzylinder 8 jeweils die stangenseitigen Zylinderinnenräume 15 mit Druck beaufschlagt. Im Ergebnis können bei entsprechender Auslegung beim Herunterschwenken des Baggerarms 5 aufgrund der Erfindung praktisch gleich große Kräfte aufgebracht werden wie beim Hochschwenken des Baggerarms 5.

Im erfindungsgemäßen Ausführungsbeispiel gemäß Fig. 6 ist der doppelt-wirkende Differentialzylinder 7 nach wie vor auf der Unterseite 9 des Baggerarms 5 angeordnet. Der ihn beim Herunterschwenken des Baggerarms 5 unterstützende einfach-wirkende Differentialzylinder 8 hingegen befindet sich auf der Oberseite 10 des Baggerarms 5. In diesem Ausführungsbeispiel wird zur Unterstützung des doppelt-wirkenden Differentialzylinders 7 beim Herunterschwenken des Baggerarms 5 der bodenseitige Zylinderraum 24 des einfach-wirkenden Differentialzylinders 8 mit Druck beaufschlagt. Beim Hochschwenken des Baggerarms 5 verrichtet auch in diesem Ausführungsbeispiel nur der doppelt-wirkende Differentialzylinder 7 Arbeit.

In Fig. 5 wird somit die Variante des einfach-wirkenden Differentialzylinders 8 gemäß Fig. 3 eingesetzt, während in Fig. 6 ein einfach-wirkender Differentialzylinder 8, wie er beispielhaft in Fig. 4 dargestellt ist, zum Einsatz kommen kann.

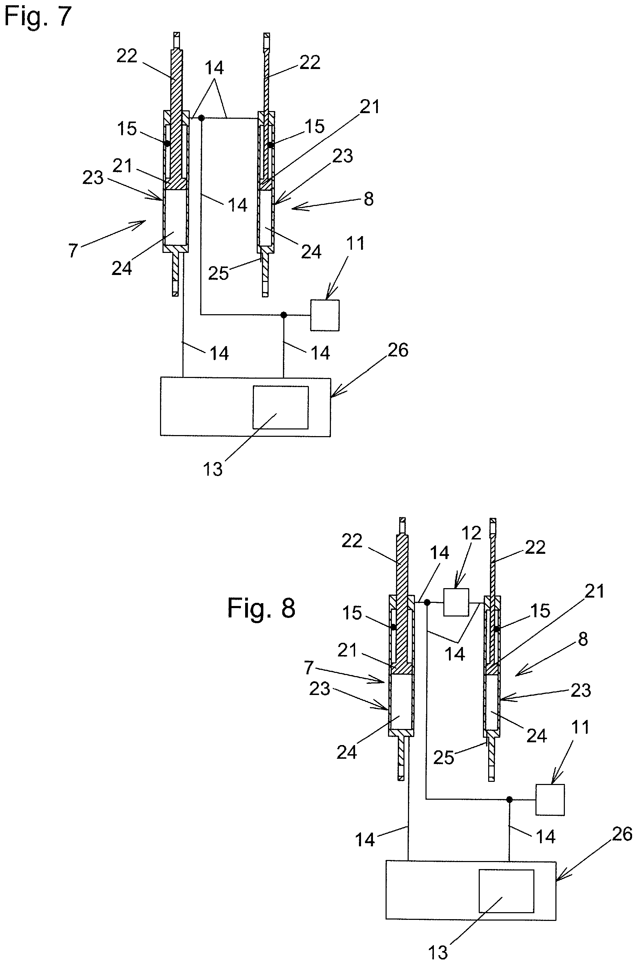

Fig. 7 und 8 zeigen nun zwei vereinfacht dargestellte Schemata, wie der doppelt-wirkende Differentialzylinder 7 und der einfach-wirkende Differentialzylinder 8 über die Druckleitungen 14 zum Hochschwenken und zum Herunterschwenken des Baggerarms 5 mit Druck beaufschlagt werden können. Auch bei der Erfindung werden solche Druckschemata üblicherweise in Form von Hydrauliksystemen ausgeführt.

Die hier nur sehr vereinfacht dargestellte Drucksteuerung 26 umfasst eine entsprechende Druckquelle und entsprechende Steuerventile, mit denen die Druckleitungen 14 selektiv mit Druck beaufschlagt werden können. Zum Hochschwenken des Baggerarms 5 relativ zum Oberwagen 2 wird jeweils nur die Druckleitung 14, welche zum bodenseitigen Zylinderraum 24 des doppelt-wirkenden Differentialzylinders 7 führt, mit Druck beaufschlagt. Soll hingegen der Baggerarm 5 relativ zum Oberwagen 2 heruntergeschwenkt werden, so werden nur die Druckleitungen 14, welche zu den jeweiligen stangenseitigen Zylinderräumen 15 des doppelt-wirkenden Differentialzylinders 7 und des einfach-wirkenden Differentialzylinders 8 führen, mit Druck beaufschlagt. Das Schema gemäß Fig. 7 deckt sich also mit dem Ausführungsbeispiel gemäß der Fig. 3 und 5 der Erfindung. Bei dem Ausführungsbeispiel gemäß der Fig. 4 und 6 hingegen würde beim Herunterschwenken des Baggerarms 5 nur der bodenseitige Zylinderraum 24 des einfach-wirkenden Differentialzylinders 8 zusammen mit dem stangenseitigen Zylinderraum 15 des doppelt-wirkenden Differentialzylinders 7 beaufschlagt werden. Abweichend von Fig. 7 würde bei dieser Variante also die Druckleitung 14 zum bodenseitigen Zylinderraum 24 des einfach-wirkenden Differentialzylinders 8 führen, während dessen stangenseitiger Zylinderinnenraum 15 mittels einer entsprechenden Entlüftungsöffnung 25 mit der Umgebung in Verbindung stehen würden. Bei der in Fig. 7 schematisch dargestellten Variante handelt es sich jedenfalls um eine solche, bei der der einfach-wirkende Differentialzylinder 8 beim Herunterschwenken des Baggerarms 5 relativ zum Oberwagen 2 immer zur Unterstützung des doppelt-wirkenden Differentialzylinders 7 mit Druck beaufschlagt wird. Bei diesen Varianten werden die zum Herunterschwenken des Baggerarms 5 benötigten Kräfte also immer gemeinsam vom doppelt-wirkenden Differentialzylinder 7 und vom einfach-wirkenden Differentialzylinder 8 zur Verfügung gestellt.

In der Variante gemäß Fig. 8 ist dies nicht so. Hier handelt es sich um ein Ausführungsbeispiel, bei dem vorgesehen ist, dass der Schreitbagger 1 ein in Abhängigkeit eines mit einem Drucksensor 11 gemessenen Druckwertes angesteuertes Regelventil 12 aufweist, mit dem der einfach-wirkende Differentialzylinder 8 beim Herunterschwenken des Baggerarms 5 relativ zum Oberwagen 2 zur Unterstützung des doppelt-wirkenden Differentialzylinders 7 selektiv in Abhängigkeit des gemessenen Druckwertes mit Druck beaufschlagbar ist. Bei solchen Ausgestaltungsformen unterstützt der einfach-wirkende Differentialzylinder 8 den doppelt-wirkenden Differentialzylinder 7 also nur dann beim Herunterschwenken des Baggerarms 5, wenn der vom Drucksensor 11 gemessene Druckwert über einem vorgebbaren Schwellwert liegt. Nur dann wird der entsprechende Zylinderraum 15 dieses einfach-wirkenden Differentialzylinders 8 über die entsprechende Druckleitung 14 mit Druck beaufschlagt. Auch in der Variante gemäß Fig. 8 kann dabei sowohl der stangenseitige Zylinderinnenraum 15 als auch der bodenseitige Zylinderraum 24 des einfach-wirkende Differentialzylinders 8 zum Einsatz kommen, je nachdem ob der einfach-wirkende Differentialzylinder 8 auf der Unterseite 9 oder der Oberseite 10 des Baggerarms 5 angeordnet ist.

Bei den Ausführungsvarianten gemäß Fig. 7 und 8 kann jeweils eine sogenannte Druckhochschaltung 13 mit integriert werden, wie dies in den Figuren schematisch angedeutet ist. Es kann dann bei beiden Varianten vorgesehen sein, dass der Schreitbagger 1 eine in Abhängigkeit eines mit einem oder dem Drucksensor 11 gemessenen Druckwertes angesteuerte Druckhochschaltung 13 aufweist, mit der der doppelt-wirkende Differentialzylinder 7, und vorzugsweise auch der einfach-wirkende Differentialzylinder 8, beim Herunterschwenken des Baggerarms 5 relativ zum Oberwagen 2 in Abhängigkeit des gemessenen Druckwertes mit einem gegenüber einem Normaldruckniveau erhöhten Druck beaufschlagbar ist bzw. sind.

Der für die Aktivierung der Druckhochschaltung 13 und/oder zur Ansteuerung des Regelventils 12 vom Drucksensor 11 gemessene Druckwert wird günstigerweise in einer der Druckleitungen 14 gemessen, welche zu einem zum Herunterschwenken des Baggerarms 5 beaufschlagten Zylinderinnenraum 15 des doppelt-wirkenden Differentialzylinders 7 führt.

### Legende zu den Hinweisziffern:

- 1: Schreitbagger
- 2: Oberwagen
- 3: Führerkabine
- 4: Schreitbein
- 5: Baggerarm
- 6: Baggerwerkzeug
- 7: doppelt-wirkender Differentialzylinder
- 8: einfach-wirkender Differentialzylinder
- 9: Unterseite
- 10: Oberseite
- 11: Drucksensor
- 12: Regelventil
- 13: Druckhochschaltung
- 14: Druckleitung
- 15: Zylinderinnenraum
- 16: Rad
- 17: Baggerarmsegment
- 18: Baggerarmsegment
- 19: Schwenkantrieb
- 20: Schwenkantrieb
- 21: Kolben
- 22: Kolbenstange
- 23: Zylinder
- 24: Zylinderraum
- 25: Entlüftungsöffnung
- 26: Drucksteuerung
- 27: gesamte Bodenfläche
- 28: reduzierte Kolbenfläche
- 29: Unterwagen

## Patentansprüche

1. Schreitbagger (1) mit einem Oberwagen (2) und einem Unterwagen (29) und einer auf dem Oberwagen (2) angeordneten Führerkabine (3) und vier verschwenkbar am Unterwagen (29) angeordneten Schreitbeinen (4) und einem schwenkbar am Oberwagen (2) gelagerten Baggerarm (5), an dem ein Baggerwerkzeug (6), insbesondere eine Baggerschaufel, befestigbar oder befestigt ist, wobei zum Hochschwenken und Herunterschwenken des Baggerarms (5) relativ zum Oberwagen (2) ein doppelt-wirkender Differentialzylinder (7) einerseits am Oberwagen (2) und andererseits am Baggerarm (5) angelenkt ist, **dadurch gekennzeichnet, dass** zur Unterstützung des doppelt-wirkenden Differentialzylinders (7) beim Herunterschwenken des Baggerarms (5) relativ zum Oberwagen (2) zusätzlich ein einfach-wirkender Differentialzylinder (8) einerseits am Oberwagen (2) und andererseits am Baggerarm (5) angelenkt ist.

2. Schreitbagger (1) nach Anspruch 1, **dadurch gekennzeichnet, dass** der einfach-wirkende Differentialzylinder (8) ausschließlich beim Herunterschwenken des Baggerarms (5) relativ zum Oberwagen (2) mit Druck beaufschlagbar ist.

3. Schreitbagger (1) nach Anspruch 1 oder 2, **dadurch gekennzeichnet, dass** der doppelt-wirkende Differentialzylinder (7) auf einer Unterseite (9) des Baggerarms (5) angeordnet ist.

4. Schreitbagger (1) nach einem der Ansprüche 1 bis 3, **dadurch gekennzeichnet, dass** der einfach-wirkende Differentialzylinder (8) auf der oder einer Unterseite (9) des Baggerarms (5) angeordnet ist.

5. Schreitbagger (1) nach einem der Ansprüche 1 bis 3, **dadurch gekennzeichnet, dass** der einfach-wirkende Differentialzylinder (8) auf einer Oberseite (10) des Baggerarms (5) angeordnet ist.

6. Schreitbagger (1) nach einem der Ansprüche 1 bis 5, **dadurch gekennzeichnet, dass** der Oberwagen (2) und der Unterwagen (29) mittels einer endlos drehbaren Verbindung miteinander verbunden sind.

7. Schreitbagger (1) nach einem der Ansprüche 1 bis 6, **dadurch gekennzeichnet, dass** der einfach-wirkende Differentialzylinder (8) beim Herunterschwenken des Baggerarms (5) relativ zum Oberwagen (2) zur Unterstützung des doppelt-wirkenden Differentialzylinders (7) immer mit Druck beaufschlagt ist.

8. Schreitbagger (1) nach einem der Ansprüche 1 bis 6, **dadurch gekennzeichnet, dass** der Schreitbagger (1) ein in Abhängigkeit eines mit einem Drucksensor (11) gemessenen Druckwertes angesteuertes Regelventil (12) aufweist, mit dem der einfach-wirkende Differentialzylinder (8) beim Herunterschwenken des Baggerarms (5) relativ zum Oberwagen (2) zur Unterstützung des doppelt-wirkenden Differentialzylinders (7) selektiv in Abhängigkeit des gemessenen Druckwertes mit Druck beaufschlagbar ist.

9. Schreitbagger (1) nach einem der Ansprüche 1 bis 8, **dadurch gekennzeichnet, dass** der Schreitbagger (1) eine in Abhängigkeit eines mit einem oder dem Drucksensor (11) gemessenen Druckwertes angesteuerte Druckhochschaltung (13) aufweist, mit der der doppelt-wirkende Differentialzylinder (7), und vorzugsweise auch der einfach-wirkende Differentialzylinder (8), beim Herunterschwenken des Baggerarms (5) relativ zum Oberwagen (2) in Abhängigkeit des gemessenen Druckwertes mit einem gegenüber einem Normaldruckniveau erhöhten Druck beaufschlagbar ist bzw. sind.

10. Schreitbagger (1) nach Anspruch 8 oder 9, **dadurch gekennzeichnet, dass** der mit dem Drucksensor (11) gemessene Druckwert ein Druck in einer Druckleitung (14) ist, welche zu einem zum Herunterschwenken des Baggerarms (5) beaufschlagten Zylinderinnenraum (15) des doppelt-wirkenden Differentialzylinders (7) führt.

## Claims

1. A walking excavator (1) having a superstructure (2) and an undercarriage (29) and a driver's cab (3) arranged on the superstructure (2) and four walking legs (4) arranged so as to swivel on the undercarriage (29) and an excavator arm (5) mounted pivotably on the superstructure (2), to which excavator arm an excavator tool (6), in particular an excavator bucket, can be or is fastened, wherein in order to pivot the excavator arm (5) upwards and downwards relative to the superstructure (2) a dual-action differential cylinder (7) is articulated on one hand to the superstructure (2) and on the other hand to the excavator arm (5), **characterised in that**, in order to support the dual-action differential cylinder (7) when the excavator arm (5) is pivoted downwards relative to the superstructure (2), additionally a single-action differential cylinder (8) is articulated on one hand to the superstructure (2) and on the other hand to the excavator arm (5).

2. A walking excavator (1) according to claim 1, **characterised in that** the single-action differential cylinder (8) can be pressurised exclusively when the excavator arm (5) is pivoted downwards relative to the superstructure (2).

3. A walking excavator (1) according to claim 1 or 2, **characterised in that** the dual-action differential cylinder (7) is arranged on an underside (9) of the excavator arm (5).

4. A walking excavator (1) according to one of claims 1 to 3, **characterised in that** the single-action differential cylinder (8) is arranged on the or an underside (9) of the excavator arm (5).

5. A walking excavator (1) according to one of claims 1 to 3, **characterised in that** the single-action differential cylinder (8) is arranged on an upper side (10) of the excavator arm (5).

6. A walking excavator (1) according to one of claims 1 to 5, **characterised in that** the superstructure (2) and the undercarriage (29) are connected together by means of an infinitely rotatable connection.

7. A walking excavator (1) according to one of claims 1 to 6, **characterised in that** the single-action differential cylinder (8) is always pressurised in order to support the dual-action differential cylinder (7) when the excavator arm (5) is pivoted downwards relative to the superstructure (2).

8. A walking excavator (1) according to one of claims 1 to 6, **characterised in that** the walking excavator (1) has a regulating valve (12) which is actuated as a function of a pressure value measured using a pressure sensor (11), with which regulating valve the single-action differential cylinder (8) can be selectively pressurised as a function of the measured pressure value in order to support the dual-action differential cylinder (7) when the excavator arm (5) is pivoted downwards relative to the superstructure (2).

9. A walking excavator (1) according to one of claims 1 to 8, **characterised in that** the walking excavator (1) has a pressure step-up means (13) which is actuated as a function of a pressure value measured using a or the pressure sensor (11), with which pressure step-up means the dual-action differential cylinder (7), and preferably also the single-action differential cylinder (8), when the excavator arm (5) is pivoted downwards relative to the superstructure (2), being able to be pressurised, as a function of the measured pressure value, with a pressure which is elevated compared with a normal pressure level.

10. A walking excavator (1) according to claim 8 or 9, **characterised in that** the pressure value measured using the pressure sensor (11) is a pressure in a pressure line (14) which leads to a cylinder interior (15) of the dual-action differential cylinder (7) which is pressurised to pivot the excavator arm (5) downwards.

## Revendications

1. Pelle-araignée (1) avec un châssis supérieur (2) et un châssis inférieur (29) et une cabine de conduite (3) disposée sur le châssis supérieur (2), et quatre jambesaraignées (4) disposées de manière pivotante sur le châssis inférieur (29), et un bras d'excavateur (5) logé pivotant sur le châssis supérieur (2), sur lequel peut être fixé ou est fixé un outil d'excavateur (6), en particulier un godet d'excavateur, un vérin différentiel à double effet (7) étant articulé d'une part au châssis supérieur (2) et d'autre part au bras d'excavateur (5) pour faire pivoter le bras d'excavateur (5) vers le haut et vers le bas par rapport au châssis supérieur (2), **caractérisée en ce qu'**un vérin différentiel à simple effet (8) est en outre articulé d'une part au châssis supérieur (2) et d'autre part au bras d'excavateur (5) pour assister le vérin différentiel à double effet (7) lors du pivotement vers le bas du bras d'excavateur (5) par rapport au châssis supérieur (2).

2. Pelle-araignée (1) selon la revendication 1, **caractérisée en ce que** le vérin différentiel à simple effet (8) peut être alimenté en pression exclusivement lors du pivotement vers le bas du bras de l'excavateur (5) par rapport au châssis supérieur (2).

3. Pelle-araignée (1) selon la revendication 1 ou 2, **caractérisée en ce que** le vérin différentiel à double effet (7) est disposé sur une face inférieure (9) du bras d'excavateur (5).

4. Pelle-araignée (1) selon l'une des revendications 1 à 3, **caractérisée en ce que** le vérin différentiel à simple effet (8) est disposé sur la face inférieure (9) du bras d'excavateur (5) ou sur une face inférieure de celui-ci.

5. Pelle-araignée (1) selon l'une des revendications 1 à 3, **caractérisée en ce que** le vérin différentiel à simple effet (8) est disposé sur une face supérieure (10) du bras d'excavateur (5).

6. Pelle-araignée (1) selon l'une des revendications 1 à 5, **caractérisée en ce que** le châssis supérieur (2) et le châssis inférieur (29) sont reliés entre eux au moyen d'une liaison rotative sans fin.

7. Pelle-araignée (1) selon l'une des revendications 1 à 6, **caractérisée en ce que** le vérin différentiel à simple effet (8) est toujours alimenté en pression lors du pivotement vers le bas du bras de l'excavateur (5) par rapport au châssis supérieur (2) afin d'assister le vérin différentiel à double effet (7).

8. Pelle-araignée (1) selon l'une des revendications 1 à 6, **caractérisée en ce que** la pelle-araignée (1) présente une vanne de régulation (12) commandée en fonction d'une valeur de pression mesurée par un capteur de pression (11), et avec laquelle, lors du pivotement vers le bas du bras de l'excavateur (5) par rapport au châssis supérieur (2), le vérin différentiel à simple effet (8) peut être alimenté en pression de manière sélective en fonction de la valeur de pression mesurée pour assister le vérin différentiel à double effet (7).

9. Pelle-araignée (1) selon l'une des revendications 1 à 8, **caractérisée en ce que** la pelle-araignée (1) présente un circuit de montée en pression (13) commandé en fonction d'une valeur de pression mesurée avec un ou le capteur de pression (11), et avec lequel le vérin différentiel à double effet (7), et de préférence également le vérin différentiel à simple effet (8), peut ou peuvent être alimentés par une pression augmentée par rapport à un niveau de pression normal lors du pivotement vers le bas du bras d'excavateur (5) par rapport au châssis supérieur (2) en fonction de la valeur de pression mesurée.

10. Pelle-araignée (1) selon la revendication 8 ou 9, **caractérisée en ce que** la valeur de pression mesurée par le capteur de pression (11) est une pression dans une conduite de pression (14) qui mène à un espace intérieur de cylindre (15) du cylindre différentiel à double effet (7) sollicité pour le pivotement vers le bas du bras d'excavateur (5).
